# EUROPÄISCHE PATENTSCHRIFT

(11) **EP 1 214 704 B1**
(45) Veröffentlichungstag und Bekanntmachung des Hinweises auf die Patenterteilung: **10.03.2004**
(21) Anmeldenummer: 00943673.4
(22) Anmeldetag: 31.05.2000
(51) Int. Cl.: G10L 15/22

(54) **VERFAHREN ZUM ERFASSEN UND AUSWERTEN VON EIN WORT DARSTELLENDEN WORTSPRACHSIGNALEN EINES BENUTZERS EINES SPRACHERKENNUNGSSYSTEMS**
METHOD AND DEVICE FOR DETECTING AND EVALUATING VOCAL SIGNALS REPRESENTING A WORD EMITTED BY A USER OF A VOICE-RECOGNITION SYSTEM
PROCEDE POUR DETECTER ET EVALUER DES SIGNAUX VOCAUX REPRESENTANT UN MOT EMIS PAR UN UTILISATEUR D'UN SYSTEME DE RECONNAISSANCE VOCALE

(30) Priorität: 03.09.1999 DE 19942172
(43) Veröffentlichungstag der Anmeldung: 19.06.2002
(73) Patentinhaber: SIEMENS AKTIENGESELLSCHAFT, 80333 München (DE)
(72) Erfinder: BAUER, Josef, D-80797 München (DE); JUNKAWITSCH, Jochen, D-80809 München (DE); SCHNEIDER, Tobias, D-81825 München (DE)
(86) Internationale Anmeldenummer: PCT/DE2000/001787
(87) Internationale Veröffentlichungsnummer: WO 2001/018793

(56) Entgegenhaltungen:
- US-A- 5 638 425
- US-A- 5 752 230
- US-A- 5 995 928
- KASPAR B ET AL: "SPRACHERKENNUNG FUER GROSSES VOKABULAR DURCH BUCHSTABIERREN" ITG FACHBERICHTE,DE,VDE VERLAG, BERLIN, Nr. 94, 28. April 1986 (1986-04-28), Seiten 31-36, XP000199294 ISSN: 0341-0196
- MARX M ET AL: "Putting people first: specifying proper names in speech interfaces" UIST 94. SEVENTH ANNUAL SYMPOSIUM ON USER INTERFACE SOFTWARE AND TECHNOLOGY. PROCEEDINGS OF THE ACM SYMPOSIUM ON USER INTERFACE SOFTWARE AND TECHNOLOGY, PROCEEDINGS OF UIST 94. USER INTERFACE SOFTWARE AND TECHNOLOGY, MARINA DEL REY, CA, USA, 2-4 NOV, Seiten 29-37, XP002147883 1994, New York, NY, USA, ACM, USA ISBN: 0-89791-657-3
- KELLNER A ET AL: "Strategies for name recognition in automatic directory assistance systems" PROCEEDINGS IEEE WORKSHOP ON INTERACTIVE VOICE TECHNOLOGY FOR TELECOMMUNICATIONS APPLICATIONS, September 1998 (1998-09), Seiten 21-26, XP002127629 in der Anmeldung erwähnt

## Beschreibung

Die Erfindung betrifft ein Verfahren zum Erfassen und Auswerten von ein Wort darstellenden Wortsprachsignalen eines Benutzers eines Spracherkennungssystems, mit folgenden Schritten:
- Erfassen der akustischen Wortsprachsignale,
- Durchführen eines Spracherkennungsvorganges und Beurteilen der Wahrscheinlichkeit einer korrekten Spracherkennung, und
- falls die Spracherkennung nicht die gewünschte Wahrscheinlichkeit erreicht, wird der Benutzer zum Buchstabieren des Wortes aufgefordert, und
- Erfassen und Auswerten der vom Benutzer buchstabierten Buchstabensprachsignale.

Ein solches Verfahren ist aus "Strategies for name recognition in automatic directory assistance systems", Andreas Kellner et al., in IEEE Workshop on interactive Voice Technology for Telecommunications Applications (IVTTA), Seiten 21-26, Turin, Italien, September 1998 bekannt. Hierin wird ein Spracherkennungssystem für ein Telefonnetzwerk beschrieben, das einen Wort-Modus und einen Buchstabier-Modus besitzt. Im Wort-Modus wird ein Wort zusammenhängend gesprochen eingegeben. Im Buchstabiermodus wird ein Wort durch Buchstabieren eingegeben. Wird im Wort-Modus ein Wort nicht mit einer ausreichenden Erkennungswahrscheinlichkeit erkannt, wird in den Buchstabier-Modus umgeschaltet, in dem das Wort durch Buchstabieren eingegeben wird. Durch den Wechsel in den Buchstabier-Modus kann der Wort-Modus auf einem relativ einfachen und schnell auszuführenden Programm beruhen, und es kann dennoch insgesamt eine sehr hohe Erkennungsrate erzielt werden, da bei allen nicht exakt erkannten Wörtern das exakte Wort im Buchstabier-Modus eingegeben wird. Jedoch wird diese hohe Erkennungsrate durch das benutzer-unfreundliche Buchstabieren, das wesentlich länger dauert, als wenn das entsprechende Wort zusammenhängend ausgesprochen wird, erkauft.

US 5,638,425 offenbart ein Verfahren zum Erfassen und Auswerten von ein Wort darstellenden Wortsprachsignalen eines Benutzers eines automatischen Auskunftsdienstes. Das Verfahren besitzt einen Wort-Modus und einen Buchstabier-Modus. Falls die Spracherkennung im Wort-Modus ein akustisches Sprachsignal nicht mit einer gewünschten Wahrscheinlichkeit erkennt, schaltet das Verfahren in den Buchstabier-Modus um und fordert den Benutzer zum Buchstabieren des Wortes auf, wozu der Benutzer das ganze Wort oder Teile davon buchstabiert.

Kaspar B. et al., "Spracherkennung für großes Vokabular durch Buchstabieren", ITG Fachberichte, 28. April 1986, Seiten 31-36, offenbart einen automatischen Auskunftsdienst mit einem Buchstabier-Modus, der einen Worterkennungsvorgang nach dem jeweiligen Erfassen der einen Buchstaben darstellenden Buchstabensprachsignale durchführt, wobei, falls mit der Worterkennung ein Wort mit der gewünschten Erkennungswahrscheinlichkeit erhalten wird, der Buchstabiervorgang abgebrochen und das Wort ausgegeben wird.

Der Erfindung liegt die Aufgabe zugrunde, die genannten Verfahren benutzerfreundlicher weiterzubilden.

Die Aufgabe wird durch Verfahren, eine Vorrichtung und ein Computerprogrammprodukt mit den Merkmalen der unabhängigen Ansprüche gelöst. Vorteilhafte Ausgestaltungen der Erfindung sind in den Unteransprüchen angegeben.

Die Verfahren enthalten die folgenden Schritte:
- Durchführen eines Worterkennungsvorganges nach dem jeweiligen Erfassen der einen einzigen Buchstaben darstellenden Buchstabensprachsignale, und
- Beurteilen der Wahrscheinlichkeit einer korrekten Worterkennung, und
- falls mit der Worterkennung ein Wort mit der gewünschten Erkennungswahrscheinlichkeit erhalten wird, wird der Buchstabiervorgang abgebrochen und das Wort ausgegeben.

Bei den Verfahren wird somit bereits nach dem Buchstabieren eines jeden Buchstabens versucht, das zu erkennende Wort zu ermitteln, und, falls ein Wort mit der gewünschten Erkennungswahrscheinlichkeit erhalten wird, der weitere Buchstabiervorgang abgebrochen und das Wort ausgegeben. Hierdurch wird der für einen Benutzer umständliche Buchstabiervorgang auf ein Minimum reduziert, so daß die Benutzerfreundlichkeit des Verfahrens gegenüber dem bekannten Verfahren erheblich gesteigert und dennoch eine optimale Erkennungsrate erzielt wird.

Darüber hinaus wird ein Spracherkennungsvorgang, mit dem zunächst die ein Wort darstellenden Wortsprachsignale eines Benutzers, die zusammenhängend ausgesprochen werden, auf Grundlage eines kleineren Wortschatzes als bei dem Worterkennungsvorgang, mit dem die die einzelnen Buchstaben darstellenden Buchstabensprachsignale ausgewertet werden, ausgeführt. Hierdurch kann der Rechenaufwand beim Spracherkennungsvorgang deutlich gegenüber einem Spracherkennungsvorgang vermindert werden, der alle eventuell möglichen Wörter berücksichtigt. Hierdurch wird ein schnelles Ansprechverhalten des erfindungsgemäßen Verfahrens erzielt.

Alternativ oder ergänzend wird beim Worterkennungsvorgang, mit dem die Buchstabensprachsignale ausgewertet werden, eine erneute Spracherkennung der Wortsprachsignale ausgeführt, wobei hierbei die durch das Auswerten der Buchstabensprachsignale erhaltenen Ergebnisse mit berücksichtigt werden. Dies erfolgt beispielsweise dadurch, daß mittels der Buchstabensprachsignale eine Wortliste erstellt wird, die bei der erneuten Spracherkennung als Wortschatz verwendet wird.

Beim Abbrechen des Buchstabiervorganges wird das erfindungsgemäße Verfahren beendet und dem Benutzer des Spracherkennungssystems eine Nachricht ausgegeben, daß der Buchstabiervorgang beendet ist, oder es wird ihm das mit der Worterkennung erkannte Wort mitgeteilt. Es ist jedoch auch möglich, daß lediglich ein vorbestimmter Dialog zwischen dem Benutzer und dem Spracherkennungssystem fortgesetzt wird.

Die Erfindung wird nachfolgend näher anhand eines in der Zeichnung dargestellten Ausführungsbeispieles erläutert. In den Zeichnungen zeigen:
- Fig. 1: die wesentlichen Schritte des erfindungsgemäßen Verfahrens in einem Flußdiagramm,
- Fig. 2: das Erfassen und Auswerten der vom Benutzer buchstabierten Buchstabensprachsignale in einem Flußdiagramm,
- Fig. 3: ein Diagramm, das zeigt, wieviel Buchstaben im Mittel buchstabiert werden müssen, um eine vorbestimmte Akzeptanzrate zu erzielen, und
- Fig. 4: eine Vorrichtung zum Ausführen des erfindungsgemäßen Verfahrens.

Das erfindungsgemäße Verfahren wird nachfolgend näher anhand eines Ausführungsbeispieles erläutert, das Bestandteil einer automatischen Telefonauskunft ist und das ein automatisches Spracherkennungssystem zum Erkennen aller deutschen Städtenamen aufweist.

In allen deutschen Telefonbüchern sind 22.077 Städtenamen aufgeführt. Diese 22.077 Wörter stellen somit den Gesamtwortschatz dar, der alle mit dem Spracherkennungssystem zu ermittelnden Städtenamen beinhaltet.

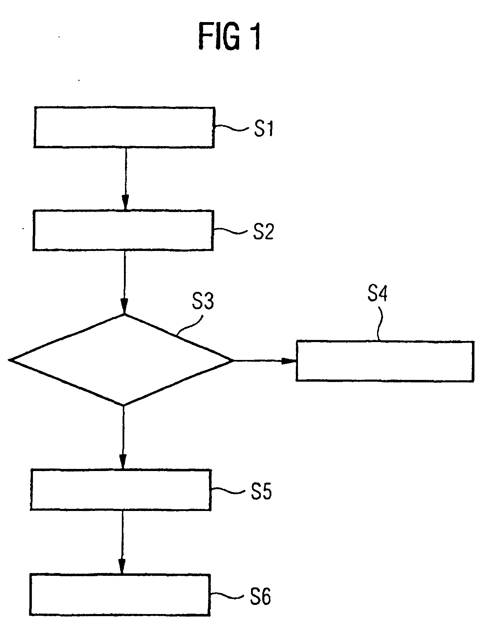

In einem Schritt S1 werden akustische Wortsprachsignale eines Benutzers erfaßt (Fig. 1). Die Wortsprachsignale sind akustische Signale, die ein Wort in normaler, zusammenhängender Aussprechweise wiedergeben. Im vorliegenden Ausführungsbeispiel sind die Wörter Städtenamen.

Die erfaßten Wortsprachsignale werden mittels eines Spracherkennungsvorganges ausgewertet. Derartige Spracherkennungsvorgänge sind an sich bekannt. Mit Ihnen wird ein Erkennungsergebnis erzeugt, das aus einem Wort oder aus einer Liste von Wörtern besteht, wobei zu jedem Wort die Wahrscheinlichkeit einer korrekten Spracherkennung ermittelt und dem jeweiligen Wort zugeordnet wird.

Im Schritt S3 wird geprüft, ob der Spracherkennungsvorgang ein Wort mit der gewünschten Spracherkennungs-Wahrscheinlichkeit ermitteln konnte. Ist dies der Fall, so wird im Schritt S4 das ermittelte Wort, das im vorliegenden Ausführungsbeispiel ein Städtename ist, ausgegeben und das erfindungsgemäße Verfahren beendet.

Ergibt der Schritt S3 hingegen, daß kein Wort mit der erforderlichen Spracherkennungs-Wahrscheinlichkeit ermittelt werden konnte, geht der Verfahrensablauf auf den Schritt S5 über, mit dem ein Buchstabiervorgang ausgeführt wird, bei dem vom Benutzer das zu ermittelnde Wort buchstabierend eingegeben und dann entsprechend ausgewertet wird. Der Buchstabiervorgang wird unten näher erläutert.

Das im Schritt S5 ermittelte Wort wird im Schritt S6 ausgegeben und das Verfahren beendet.

Bei dem Ausführungsbeispiel zum Erfassen und Auswerten eines Städtenamens wird die Spracherkennung nicht auf Grundlage des Gesamtwortschatzes mit 22.077 Städtenamen, sondern lediglich auf Grundlage eines mittleren Wortschatzes mit etwa 1.000 bis 5.000 Städtenamen ausgeführt. Dieser gegenüber dem Gesamtwortschatz deutlich verringerte Wortschatz enthält die am häufigsten abgefragten Städtenamen. Durch die Reduktion des Wortschatzes kann die zur Ausführung eines Computerprogrammes zur Spracherkennung notwendige Rechenleistung erheblich vermindert werden. Durch den reduzierten Wortschatz kann für einen Großteil der Anfragen sehr schnell und mit einer hohen Erkennungsrate der gewünschte Städtename ermittelt werden.

Da der Spracherkennung S2 der Buchstabiervorgang S5 nachgeschaltet ist, kann die Anforderung an die Wahrscheinlichkeit einer korrekten Spracherkennung sehr hoch gesetzt werden, da ein mit der Spracherkennung nicht korrekt erkannter Städtename erneut im Buchstabiervorgang eingegeben werden kann und eine Zurückweisung im Schritt S3 für das Gesamtergebnis des erfindungsgemäßen Verfahrens keine negativen Auswirkungen erzeugt.

Zweckmäßigerweise sind die Anforderungen an die Wahrscheinlichkeit einer korrekten Spracherkennung derart hoch gesetzt, daß die Rate der Wörter, die im Schritt S2 fehlerhaft erkannt und im Schritt S3 jedoch als korrekt erkannt bewertet werden, kleiner als 3 % und vorzugsweise kleiner als 1 % ist.

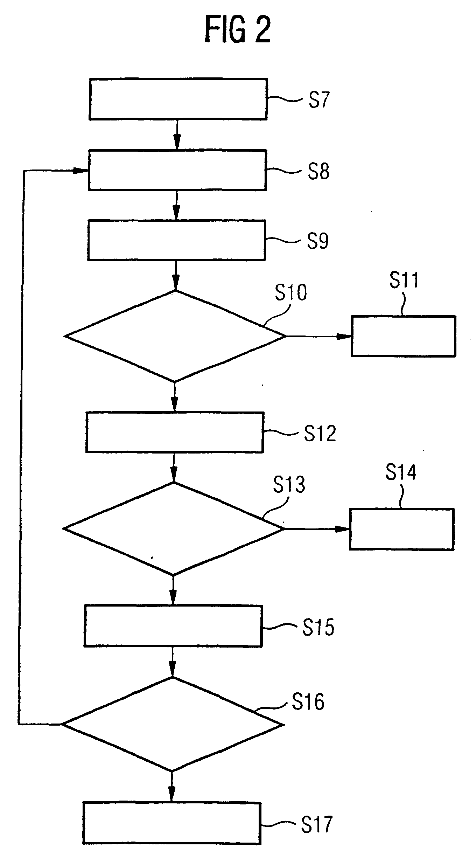

In Fig. 2 ist der Buchstabiervorgang gemäß dem Schritt S5 mit seinen Einzelschritten in einem Flußdiagramm dargestellt.

Im Schritt S7 wird der Benutzer aufgefordert, den Städtenamen zu buchstabieren. Beim vorliegenden Ausführungsbeispiel wird der Benutzer aufgefordert, die Buchstaben einzeln zu buchstabieren.

Im Schritt S8 werden die Buchstabensprachsignale, die einen einzelnen Buchstaben darstellen, erfaßt und erkannt.

Nach Maßgabe der im Schritt S8 erfaßten und ausgewerteten Buchstabensignale wird im Schritt S9 eine Wortliste erstellt. Diese Wortliste wird auf Grundlage des gesamten Wortschatzes aller 22.077 Städtenamen erstellt, wobei den einzelnen Städtenamen Buchstabenerkennungs-Wahrscheinlichkeiten zugeordnet werden. Die Buchstabenerkennungs-Wahrscheinlichkeit ist die Wahrscheinlichkeit, mit der ein oder mehrere buchstabierte Buchstaben des Wortes anhand der erfaßten und ausgewerteten Buchstabensignale korrekt erkannt werden.

Ist z.B. der erste vom Benutzer buchstabierte Buchstabe ein "B", so werden allen Städtenamen, die mit einem "B" beginnen, hohe Buchstabenerkennungs-Wahrscheinlichkeiten zugeordnet. Ferner werden allen Städtenamen, die mit einem "W" beginnen, auch relativ hohe Buchstabenerkennungs-Wahrscheinlichkeiten zugeordnet, da in der deutschen Sprache ein "B" und ein "W" sehr ähnlich klingen und daher das "W" mit relativ hoher Wahrscheinlichkeit als korrekter Buchstabe für die erfaßten und ausgewerteten Buchstabensignale des buchstabierten "B" erkannt werden kann. Städtenamen, die mit einem anderen Buchstaben beginnen, werden dementsprechend wesentlich geringere Buchstabenerkennungs-Wahrscheinlichkeiten zugeordnet. In der Wortliste werden jedoch nur die Städtenamen aufgenommen, deren Buchstabenerkennungs-Wahrscheinlichkeit nicht kleiner als die größte ermittelte Buchstabenerkennungs-Wahrscheinlichkeit minus eines vorbestimmten Schwellenwertes SW1 ist. Die übrigen Städtenamen werden bei den nachfolgenden Schritten nicht berücksichtigt. Die hierbei angewandte Methode zur Bestimmung der Wortliste beruht auf dem Viterbi-Algorithmus.

Bei der Eingabe eines "B" als erstem Buchstaben enthält die Liste somit alle Städtenamen, die mit einem "B" oder einem "W" beginnen.

Im nächsten Schritt S10 wird geprüft, ob die Liste lediglich einen einzigen Städtenamen enthält. Ist dies der Fall, wird im Schritt S11 der Verfahrensablauf auf das Hauptverfahren gemäß Fig. 1 übergeben, wo dann im Schritt S6 der ermittelte Städtename ausgegeben und der Buchstabiervorgang.abgebrochen wird.

Enthält die Wortliste jedoch mehrere Städtenamen, so verzweigt sich der Verfahrensablauf auf den Schritt S12, bei dem erneut eine Spracherkennung der ursprünglich eingegebenen Wortsprachsignale ausgeführt wird, wobei der Spracherkennung die im Schritt S9 erstellte Wortliste als Wortschatz zugrunde liegt. Da die Spracherkennung auf den gleichen Wortsprachsignalen wie im Schritt S2 beruht, werden für die gleichen Wörter die gleichen Spracherkennungs-Wahrscheinlichkeiten ermittelt. Dieser Schritt unterscheidet sich durch den neuen Wortschatz, der nach Maßgabe der buchstabierten Buchstaben bestimmt worden ist, von der Spracherkennung nach dem Schritt S2. Den gegenüber dem ursprünglich im Schritt S2 verwendeten Wortschatz neu hinzugekommenen Städtenamen wird erstmals eine Spracherkennungs-Wahrscheinlichkeit zugeordnet. Die mit der Spracherkennung nach dem Schritt S12 ermittelte Spracherkennungs-Wahrscheinlichkeit wird nicht mit der nach der Buchstabenerkennung des Schrittes S8 ermittelten Buchstabenerkennungs-Wahrscheinlichkeit kombiniert.

Alternativ ist es jedoch auch möglich, diese beiden Erkennungswahrscheinlichkeiten zu kombinieren. Sie können bspw. mittels einer Multiplikation miteinander verknüpft werden.

Im nächsten Schritt S13 wird geprüft, ob die größte Spracherkennungs-Wahrscheinlichkeit eines Städtenamens um einen vorbestimmten Schwellenwert SW2 größer als die zweitgrößte Spracherkennungs-Wahrscheinlichkeit eines weiteren Städtenamens der Wortliste ist. Ist dies der Fall, verzweigt der Verfahrensablauf auf den Schritt S14, mit dem der Verfahrensablauf wieder auf das Hauptverfahren übergeben wird, in dem der Städtename mit der größten Spracherkennungs-Wahrscheinlichkeit ausgegeben und der Buchstabiervorgang abgebrochen wird. Ist die größte Spracherkennungs-Wahrscheinlichkeit nicht um den vorbestimmten Schwellenwert SW2 größer als die nächstgrößere Spracherkennungs-Wahrscheinlichkeit, so geht der Verfahrensablauf auf den Schritt S15 über, in dem dem Benutzer ein Signal zum Sprechen des nächsten Buchstabens ausgegeben wird und eine Pause zum Aussprechen des nächsten Buchstaben gemacht wird. Das Signal ist beispielsweise ein kurzes Tonsignal.

Im Schritt S16 wird geprüft, ob der Benutzer einen weiteren Buchstaben spricht. Falls der Benutzer einen weiteren Buchstaben spricht, geht der Verfahrensablauf wieder auf den Schritt S8 über, mit dem der weitere Buchstabe erfaßt und erkannt wird. Hierdurch wird ein Schleifendurchgang mit den Schritten S8, S9, S10, S11 bzw. S12, S13, S14 bzw. S15 und S16 begonnen.

Wie im ersten Schleifendurchgang wird bei jedem weiteren Schleifendurchgang im Schritt S9 eine neue Wortliste erstellt. Hierzu wird den einzelnen Städtenamen wieder eine Buchstabenerkennungs-Wahrscheinlichkeit zugeordnet. Diese Buchstabenerkennungs-Wahrscheinlichkeit wird auf Grundlage der Erkennungswahrscheinlichkeiten, mit welchen die einzelnen Buchstaben der Städtenamen durch die erfaßten und bewerteten Buchstabensignale korrekt erkannt werden, ermittelt. Die Buchstabenerkennungs-Wahrscheinlichkeit wird durch Multiplizieren aller Erkennungswahrscheinlichkeiten der Folge von buchstabierten Buchstaben der Städtenamen, für die eine korrespondierende Folge von Buchstabensignalen erfaßt und ausgewertet wurde, berechnet. Diese Berechnung wird derart ausgeführt, daß die zuvor im Schritt S8 ermittelte Buchstabenerkennungs-Wahrscheinlichkeit mit der Buchstabenerkennungs-Wahrscheinlichkeit der Ausführung des Schrittes S8 im vorhergehenden Schleifendurchgang kombiniert, das heißt multipliziert wird.

In die Wortliste werden wiederum nur die Städtenamen aufgenommen, deren Buchstabenerkennungs-Wahrscheinlichkeit nicht kleiner als die größte ermittelte Buchstabenerkennungs-Wahrscheinlichkeit minus eines vorbestimmten Schwellenwertes SW1 ist. Die übrigen Städtenamen werden bei den nachfolgenden Schritten nicht berücksichtigt, d.h., daß eine neue Liste erstellt wird, wobei einzelne Städtenamen gegenüber der bisherigen Liste nicht berücksichtigt werden und andere neu aufgenommen werden. Hierbei ergibt sich jedoch eine Tendenz, gemäß der sich die Anzahl der Wörter in der Wortliste mit jedem Schleifendurchgang verringert, da die Erkennung umso spezifischer ist, je mehr Buchstabensignale erfaßt und ausgewertet werden.

Bei mehreren Durchgängen der Schleife wird die Wortliste allein nach Maßgabe der beim Buchstabieren eingegebenen Buchstaben reduziert, und die Abfrage des Schrittes S10 beruht somit lediglich auf der Buchstabenerkennungs-Wahrscheinlichkeit.

Diese Schleife wird so oft durchlaufen, bis eine der beiden Abfragen in den Schritten S10 und S13 ergibt, daß ein Städtename mit der notwendigen Erkennungswahrscheinlichkeit ermittelt worden ist. Führen die Schritte S10 und S13 nicht zu einem Abbruch der Schleife, sondern erfolgt ein Abbruch der Schleife im Schritt S16, also dadurch, daß festgestellt wird, daß der Benutzer nicht mehr spricht, geht der Verfahrensablauf auf den Schritt S17 über, mit dem entweder das Wort, das die größte Erkennungswahrscheinlichkeit besitzt, oder eine Restliste mit bspw. den drei bis zehn Wörtern der Wortliste ausgegeben wird, denen die größten Erkennungswahrscheinlichkeiten zugeordnet worden sind.

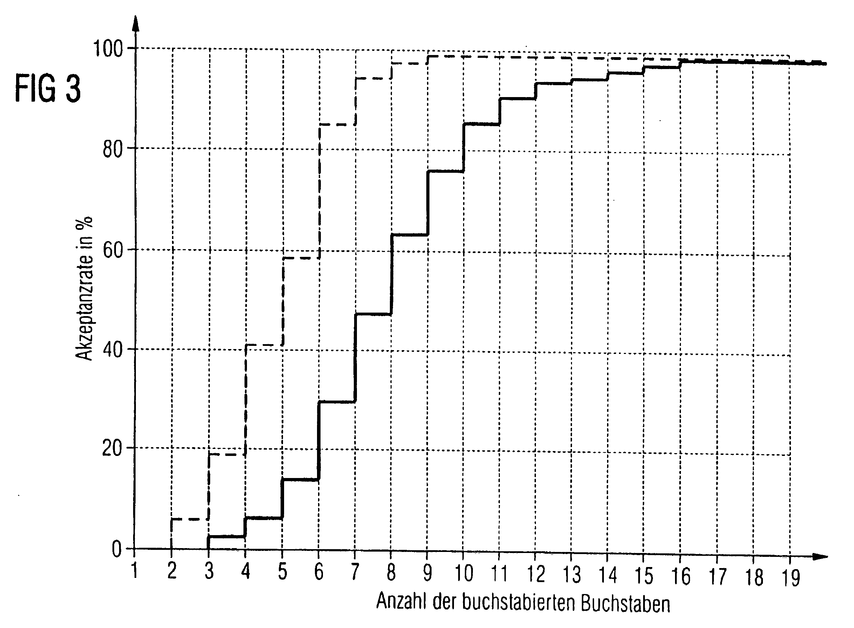

In Fig. 3 ist ein Diagramm dargestellt, in dem gezeigt ist, wieviele Buchstaben im Mittel buchstabiert werden müssen, d.h., wieviele Schleifendurchgänge ausgeführt werden müssen, bis eine vorbestimmte Akzeptanzrate erzielt wird. In dem Diagramm ist das Ergebnis für das erfindungsgemäße Verfahren gestrichelt eingezeichnet, das zwei Abbruchkriterien bei den Schritten S10 und S13 aufweist. Das Ergebnis für ein herkömmliches Verfahren ohne derartige Abbruchkriterien ist mit einer durchgezogenen Linie gezeichnet. Anhand dieses Diagrammes erkennt man, daß z.B. nach dem Buchstabieren von 7 Buchstaben mit den bekannten Buchstabierverfahren lediglich eine Akzeptanzrate von knapp über 40 % erzielt wird, wohingegen mit dem erfindungsgemäßen Verfahren bereits eine Akzeptanzrate von über 80 % erzielt wird. Mit dem erfindungsgemäßen Verfahren müssen wesentlich weniger Buchstaben buchstabiert werden, als es bei herkömmlichen Buchstabierverfahren der Fall ist. Dieses Diagramm zeigt zudem, daß mit dem Buchstabieren von sechs Buchstaben bereits Akzeptanzraten von 80 % bis 100 % erzielt werden.

Mit dem erfindungsgemäßen Verfahren kann demnach die durchschnittliche Anzahl der zu buchstabierenden Buchstaben auf fünf bis sieben begrenzt werden.

Mit dem oben beschriebenen Ausführungsbeispiel zum Erfassen und Auswerten der Städtenamen von Deutschland wurde eine erfolgreiche Erkennungsrate bereits bei einer mittleren Anzahl von 4,9 Buchstaben erzielt.

Die vorliegende Erfindung ist nicht auf das automatische Erfassen und Erkennen von Städtenamen beschränkt, sondern ist insbesondere für alle Wortschätze mit begrenzter Wortzahl geeignet. Sie kann jedoch auch für unbegrenzte Wortschätze verwendet werden. Das Verfahren ist dann in an sich bekannter Weise derart abzuwandeln, daß bei der buchstabierten Eingabe von Wörtern, die noch nicht im Gesamtwortschatz enthalten sind, eine Routine ausgeführt wird, mit welcher diese Wörter dem Gesamtwortschatz hinzugefügt werden.

Das erfindungsgemäße Verfahren kann auch derart abgewandelt werden, daß den einzelnen Wörtern eine auf Grundlage der Buchstaben- und Spracherkennung kombinierte Erkennungswahrscheinlichkeit zugeordnet wird. Hierbei erfolgt die Erstellung der Wortliste auf Grundlage der kombinierten Erkennungswahrscheinlichkeit. Dies hat zur Folge, daß die beiden Erkennungswahrscheinlichkeiten des oben beschriebenen Ausführungsbeispiels, die den Abbruchkriterien nach den Schritten S10 und S13 zugrunde liegen, identisch sind, weshalb ein Abbruchkriterium gestrichen werden kann.

Nach einem vereinfachten Verfahren ist es auch möglich, aus einer einmal erstellten Wortliste bei jedem Schleifendurchgang lediglich Wörter zu entfernen. Da hierbei keine neuen Wörter hinzukommen können, muß die Spracherkennung des Schrittes S12 lediglich ein einziges Mal beim ersten Schleifendurchgang ausgeführt werden, da die in der Liste aufgeführten Städtenamen bereits alle mit der entsprechenden Spracherkennungs-Wahrscheinlichkeit bewertet sind.

Beim obigen Ausführungsbeispiel werden beim Buchstabieren die Buchstaben isoliert ausgesprochen und jeweils einzeln erkannt. Es ist jedoch auch möglich, die Buchstaben beim Buchstabieren kontinuierlich auszusprechen. Bei einem derartigen kontinuierlichen Verfahren kann der Schritt S15 (Signal für nächsten Buchstaben und Pause) entfallen.

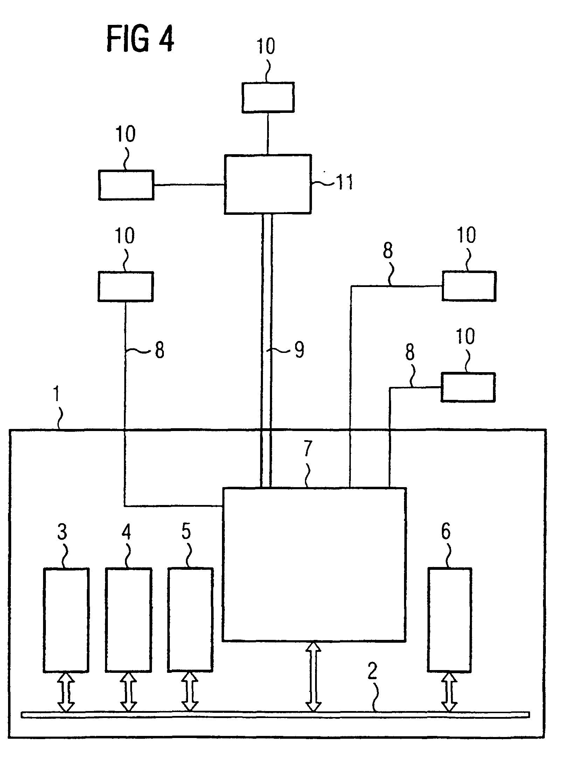

Fig. 4 zeigt eine Vorrichtung, nämlich eine Telefonkommunikations-Anlage 1 für eine automatische Telefonauskunft. Die Telefonkommunikations-Anlage 1 ist als digital arbeitende Telefonkommunikations-Anlage mit einem internen Datenbus 2, einer zentralen Prozessoreinheit 3, einem Speicher 4, einer Spracherkennungseinheit 5 und einer Sprachausgabeeinheit 6 ausgebildet. An den Datenbus 2 ist eine Schalteinheit 7 angeschlossen, über die analoge und digitale Telefonleitungen 8, 9 über den Datenbus 2 mit den Einheiten 3 bis 6 in Verbindung geschaltet werden können. An den Telefonleitungen 8, 9 sind Telefonendgeräte 10 angeschlossen, wobei eine oder mehrere Vermittlungsstellen 11 zwischengeschaltet sein können.

Ein Benutzer kann an einem der Telefonendgeräte 10 die Telefonkommunikations-Anlage 1 anwählen, wodurch er über die Schalteinheit 7 und den Datenbus 2 mit den Einheiten 3 bis 6 verbunden wird.

Im Speicher 4 sind mehrere Computerprogramme gespeichert. Eines davon ist zum Ausführen des oben beschriebenen Ausführungsbeispiels zum Erkennen von Städtenamen vorgesehen. Gelangt der Benutzer in seinem Dialog mit der Telefonkommunikations-Anlage zu einem Punkt, an dem ein Städtename eingegeben werden muß, so wird mittels der Sprachausgabeeinheit 6 eine entsprechende Aufforderung an den Benutzer ausgegeben, der dann einen Städtenamen spricht. Dieser wird dann mit Hilfe der Spracherkennungseinheit 5 erfaßt und gemäß dem oben beschriebenen Verfahren ausgewertet, wobei der Benutzer bei Bedarf aufgefordert wird, den Städtenamen zu buchstabieren.

Da das erfindungsgemäße Verfahren nicht auf das Erkennen von Städtenamen beschränkt ist, können mehrere Programme, die gemäß dem erfindungsgemäßen Verfahren arbeiten, vorgesehen sein, die jeweils Wörter bestimmter Wortschätze, z.B. Personen- und Firmennamen, Zahlen, Aktien oder dgl., erkennen können. Diese erfindungsgemäß ausgebildeten Computerprogramme werden von einem übergeordneten Dialogsteuerungsprogramm aufgerufen und gesteuert.

Diese Computerprogramme können auch auf einen elektronisch lesbaren Datenträger gespeichert und bspw. auf eine andere Telefonkommunikations-Anlage übertragen werden.

## Patentansprüche

1. Verfahren zum Erfassen und Auswerten von ein Wort darstellenden Wortsprachsignalen eines Benutzers eines Spracherkennungssystemes, mit folgenden Schritten:
- Erfassen der akustischen Wortsprachsignale,
- Durchführen eines Spracherkennungsvorganges und Beurteilen der Wahrscheinlichkeit einer korrekten Spracherkennung,
- falls die Spracherkennung nicht die gewünschte Wahrscheinlichkeit erreicht, wird der Benutzer zum Buchstabieren des Wortes aufgefordert,
- Erfassen und Auswerten der vom Benutzer buchstabierten Buchstabensprachsignale,
- Durchführen eines Worterkennungsvorganges nach dem jeweiligen Erfassen der einen einzigen Buchstaben darstellenden Buchstabensprachsignale,
- Beurteilen der Wahrscheinlichkeit einer korrekten Worterkennung,
- falls mit der Worterkennung ein Wort mit der gewünschten Erkennungswahrscheinlichkeit erhalten wird, wird der Buchstabiervorgang abgebrochen und das Wort ausgegeben,
- wobei der Spracherkennungsvorgang auf Grundlage eines kleineren Wortschatzes als der Worterkennungsvorgang ausgeführt wird.

2. Verfahren nach Anspruch 1,
**dadurch gekennzeichnet,**
**daß** beim Worterkennungsvorgang eine Wortliste nach Maßgabe der erfaßten Buchstabensprachsignale erstellt wird, wobei den Wörtern eines Gesamtwortschatzes jeweils eine Buchstabenerkennungs-Wahrscheinlichkeit aufgrund der Buchstabensprachsignale zugeordnet wird, und
die Wortliste alle Wörter umfaßt, deren Buchstabenerkennungs-Wahrscheinlichkeit nicht kleiner als die größte ermittelte Buchstabenerkennungs-Wahrscheinlichkeit eines Wortes minus eines Schwellenwertes (SW1) ist.

3. Verfahren nach Anspruch 2,
**dadurch gekennzeichnet,**
**daß** geprüft wird, ob die Wortliste lediglich ein einziges Wort enthält, und falls lediglich ein einziges Wort enthalten ist, wird dieses ausgegeben und der Buchstabiervorgang abgebrochen.

4. Verfahren nach Anspruch 2 oder 3,
**dadurch gekennzeichnet,**
**daß**, eine erneute Spracherkennung der Wortsprachsignale durchgeführt wird, bei der den Wörtern der Wortliste jeweils eine Spracherkennungs-Wahrscheinlichkeit zugeordnet wird, und geprüft wird, ob die größte und die zweitgrößte Spracherkennungs-Wahrscheinlichkeit sich um einen vorbestimmten Schwellenwert (SW2) unterscheiden, und falls dies der Fall ist, wird das Wort der Wortliste mit der größten Spracherkennungs-Wahrscheinlichkeit ausgegeben und der Buchstabiervorgang abgebrochen.

5. Verfahren zum Erfassen und Auswerten von ein Wort darstellenden Wortsprachsignalen eines Benutzers eines Spracherkennungssystemes, insbesondere nach einem der vorhergehenden Ansprüche, mit folgenden Schritten:
- Erfassen der akustischen Wortsprachsignale,
- Durchführen eines Spracherkennungsvorganges und Beurteilen der Wahrscheinlichkeit einer korrekten Spracherkennung,
- falls die Spracherkennung nicht die gewünschte Wahrscheinlichkeit erreicht, wird der Benutzer zum Buchstabieren des Wortes aufgefordert,
- Erfassen und Auswerten der vom Benutzer buchstabierten Buchstabensprachsignale,
- Durchführen eines Worterkennungsvorganges nach dem jeweiligen Erfassen der einen einzigen Buchstaben darstellenden Buchstabensprachsignale,
- Beurteilen der Wahrscheinlichkeit einer korrekten Worterkennung,
- falls mit der Worterkennung ein Wort mit der gewünschten Erkennungswahrscheinlichkeit erhalten wird, wird der Buchstabiervorgang abgebrochen und das Wort ausgegeben, und
- eine erneute Spracherkennung der Wortsprachsignale, die unter Berücksichtigung der erfaßten Buchstabensprachsignale durchgeführt wird.

6. Verfahren zum Erfassen und Auswerten von ein Wort darstellenden Wortsprachsignalen eines Benutzers eines Spracherkennungssystemes, insbesondere nach einem der vorhergehenden Ansprüche, mit folgenden Schritten:
- Erfassen der akustischen Wortsprachsignale,
- Durchführen eines Spracherkennungsvorganges und Beurteilen der Wahrscheinlichkeit einer korrekten Spracherkennung,
- falls die Spracherkennung nicht die gewünschte Wahrscheinlichkeit erreicht, wird der Benutzer zum Buchstabieren des Wortes aufgefordert,
- Erfassen und Auswerten der vom Benutzer buchstabierten Buchstabensprachsignale,
- Durchführen eines Worterkennungsvorganges nach dem jeweiligen Erfassen der einen einzigen Buchstaben darstellenden Buchstabensprachsignale,
- Beurteilen der Wahrscheinlichkeit einer korrekten Worterkennung,
- falls mit der Worterkennung ein Wort mit der gewünschten Erkennungswahrscheinlichkeit erhalten wird, wird der Buchstabiervorgang abgebrochen und das Wort ausgegeben,
- wobei beim Worterkennungsvorgang eine Buchstabenerkennungs-Wahrscheinlichkeit auf Grundlage der erfaßten und ausgewerteten Buchstabensignale ermittelt und mit einer auf Grundlage der erfaßten und ausgewerteten Wortsprachsignale ermittelten Spracherkennungs-Wahrscheinlichkeit zu einer kombinierten Erkennungswahrscheinlichkeit verknüpft wird.

7. Verfahren nach Anspruch 6,
**dadurch gekennzeichnet,**
**daß** eine Wortliste nach Maßgabe der kombinierten Erkennungswahrscheinlichkeit erstellt wird.

8. Verfahren nach Anspruch 6 oder 7,
**dadurch gekennzeichnet,**
**daß** lediglich mit einer einzigen Abfrage geprüft wird, ob ein Wort mit der gewünschten Erkennungswahrscheinlichkeit erhalten wird, wobei als Erkennungswahrscheinlichkeit die kombinierte Erkennungswahrscheinlichkeit verwendet wird.

9. Verfahren nach einem der Ansprüche 1 bis 8,
**dadurch gekennzeichnet,**
**daß** das Abbrechen des Buchstabiervorganges durch Ausgeben einer entsprechenden Nachricht an den Benutzer und durch Beendigen des Verfahrens zum Erfassen und Auswerten eines Wortes erfolgt.

10. Verfahren nach einem der Ansprüche 2 bis 9,
**dadurch gekennzeichnet,**
**daß**, wenn der Buchstabiervorgang noch nicht abgebrochen worden ist, nach dem Erfassen und Auswerten der jeweils einen Buchstaben darstellenden Buchstabensprachsignale geprüft wird, ob der Benutzer weiter spricht, und falls er weiter spricht, werden die nächsten jeweils einen Buchstaben darstellenden Sprachsignale erfaßt, und falls der Benutzer nicht weiter spricht, wird die Wortliste bzw. eine vorbestimmte Anzahl der Wörter mit der größten Wahrscheinlichkeit der Wortliste ausgegeben.

11. Vorrichtung, die eingerichtet ist und Mittel aufweist, um ein Verfahren nach einem der Ansprüche 1 bis 10 durchzuführen.

12. Vorrichtung nach Anspruch 11,
**dadurch gekennzeichnet,**
**daß** die Vorrichtung eine Telefonkommunikations-Anlage (1) ist, die eine Schalteinheit (7) aufweist, mit der Telefonleitungen (8, 9) mit einem internen Datenbus (2) verbunden werden können.

13. Computerprogrammprodukt für eine Datenverarbeitungsanlage, das Softwarecodeabschnitte enthält, mit denen ein Verfahren nach zumindest einem der Ansprüche 1 bis 10 auf einer Datenverarbeitungsanlage ausgeführt werden kann.

## Claims

1. Method for detecting and evaluating word speech signals representing a word from a user of a speech recognition system, having the following steps:
- detecting the acoustic word speech signals,
- carrying out a speech recognition operation and assessing the probability of correct speech recognition,
- if the speech recognition does not reach the desired probability, the user is prompted to spell out the word,
- detecting and evaluating the letter speech signals spelt out by the user,
- carrying out a word recognition operation after the respective detection of the letter speech signals representing a single letter,
- assessing the probability of correct word recognition,
- if a word is obtained with the desired probability with the aid of the word recognition, the spelling process is terminated and the word is output,
- the speech recognition operation being executed on the basis of a smaller vocabulary than does the word recognition operation.

2. Method according to Claim 1, **characterized in that** the during the word recognition operation, a word list is drawn up in accordance with the detected letter speech signals, the words of a total vocabulary in each case being assigned a letter recognition probability on the basis of the letter speech signals, and the word list comprising all words whose letter recognition probability is not lower than the highest determined letter recognition probability of a word minus a threshold value (SW1).

3. Method according to Claim 2, **characterized in that** a check is made as to whether the word list contains only a single word, and if only a single word is contained the latter is output and the spelling process is terminated.

4. Method as claimed in Claim 2 or 3, **characterized in that** a renewed speech recognition of the word speech signals is carried out in which the words of the word list are respectively assigned a speech recognition probability, and a check is made as to whether the highest and the second highest speech recognition probability differ from one another by a predetermined threshold value (SW2), and if this is the case the word of the word list with the highest speech recognition probability is output, and the spelling process is terminated.

5. Method for detecting and evaluating word speech signals representing a word from a user of a speech recognition system, in particular according to one of the preceding claims, having the following steps:
- detecting the acoustic word speech signals,
- carrying out a speech recognition operation and assessing the probability of correct speech recognition,
- if the speech recognition does not reach the desired probability, the user is prompted to spell out the word,
- detecting and evaluating the letter speech signals spelt out by the user,
- carrying out a word recognition operation after the respective detection of the letter speech signals representing a single letter,
- assessing the probability of correct word recognition,
- if a word is obtained with the desired probability with the aid of the word recognition, the spelling process is terminated and the word is output, and
- a renewed speech recognition of the word speech signals is carried out taking account of the detected letter speech signals.

6. Method for detecting and evaluating word speech signals representing a word from a user of a speech recognition system, in particular according to one of the preceding claims, having the following steps:
- detecting the acoustic word speech signals,
- carrying out a speech recognition operation and assessing the probability of correct speech recognition,
- if the speech recognition does not reach the desired probability, the user is prompted to spell out the word,
- detecting and evaluating the letter speech signals spelt out by the user,
- carrying out a word recognition operation after the respective detection of the letter speech signals representing a single letter,
- assessing the probability of correct word recognition,
- if a word is obtained with the desired probability with the aid of the word recognition, the spelling process is terminated and the word is output,
- during the word recognition operation a letter recognition probability being determined on the basis of the detected and evaluated letter signals and being combined with a speech recognition probability determined on the basis of the detected and evaluated word speech signals to form a combined recognition probability.

7. Method according to Claim 6, **characterized in that** a word list is drawn up in accordance with the combined recognition probability.

8. Method according to Claim 6 or 7, **characterized in that** a check is made solely with the aid of a single interrogation as to whether a word is obtained with the desired recognition probability, the combined recognition probability being used as recognition probability.

9. Method according to one of Claims 1 to 8, **characterized in that** the spelling process is terminated by outputting an appropriate message to the user and by ending the method for detecting and evaluating a word.

10. Method according to one of Claims 2 to 9, **characterized in that** when the spelling process has not yet been terminated, after the detection and evaluation of the letter speech signals respectively representing a letter, a check is made as to whether the user is continuing to speak, and if he is continuing to speak the next speech signals respectively representing a letter are detected, and if the user is not continuing to speak the word list or a predetermined number of the words with the highest probability of the word list is output.

11. Device that is set up, and has means, for carrying out a method according to one of Claims 1 to 10.

12. Device according to Claim 11, **characterized in that**
the device is a telephone communication system (1) that has a switching unit (7) with the aid of which telephone lines (8, 9) can be connected to an internal databus (2).

13. Computer program product for a data processing system that contains software code sections with the aid of which a method according to at least one of Claims 1 to 10 can be executed on a data processing system.

## Revendications

1. Procédé destiné à détecter et à évaluer des signaux vocaux représentant un mot prononcé par un utilisateur d'un système de reconnaissance vocale et comportant les étapes suivantes:
- détection des signaux vocaux acoustiques,
- exécution d'un processus de reconnaissance vocale et appréciation de la probabilité d'une reconnaissance correcte de la parole,
- si la reconnaissance de la parole ne parvient pas à la probabilité escomptée, l'utilisateur est invité à épeler les lettres du mot,
- détection et évaluation des signaux vocaux résultant de l'épellation des lettres par l'utilisateur,
- exécution d'un processus de reconnaissance de mots après la détection correspondante des signaux vocaux représentant une seule lettre,
- appréciation de la probabilité d'une reconnaissance correcte du mot,
- si, avec la reconnaissance du mot, on obtient un mot ayant la probabilité de reconnaissance escomptée, le processus d'épellation est interrompu et le mot édité,
- le processus de reconnaissance vocale étant exécuté sur la base d'un vocabulaire plus réduit que le processus de reconnaissance de mots.

2. Procédé selon la revendication 1
**caractérisé par le fait**
**que**, lors du processus de reconnaissance de mots, une liste de mots est établie en fonction des signaux vocaux de lettres, qui sont détectés, une probabilité de reconnaissance de lettres étant allouée à chacun des mots d'un vocabulaire total sur la base des signaux vocaux de lettres, et
**que** la liste de mots renferme tous les mots dont la probabilité de reconnaissance de lettres n'est pas inférieure à la plus grande probabilité de reconnaissance de lettres d'un mot diminuée d'une valeur seuil (SW1).

3. Procédé selon la revendication 2
**caractérisé par le fait**
**que** l'on vérifie si la liste de mots ne comprend qu'un seul et unique mot et, si elle ne comprend qu'un seul et unique mot, on l'édite et le processus d'épellation est interrompu.

4. Procédé selon la revendication 2 ou 3
**caractérisé par le fait**
**qu'**une nouvelle reconnaissance vocale des signaux vocaux de mots est exécutée, au cours de laquelle une probabilité de reconnaissance de la parole est allouée à chacun des mots de la liste de mots et que l'on vérifie si la première et la deuxième probabilité les plus grandes de reconnaissance vocale sont différentes l'une de l'autre d'une valeur seuil donnée (SW2) et, si c'est le cas, le mot de la liste de mots ayant la plus grande probabilité de reconnaissance vocale est édité et le processus d'épellation est interrompu.

5. Procédé destiné à détecter et à évaluer des signaux vocaux représentant un mot prononcé par un utilisateur d'un système de reconnaissance vocale, notamment selon l'une des revendications précédentes, et comportant les étapes suivantes:
- détection des signaux vocaux acoustiques,
- exécution d'un processus de reconnaissance vocale et appréciation de la probabilité d'une reconnaissance correcte de la parole,
- si la reconnaissance de la parole ne parvient pas à la probabilité escomptée, l'utilisateur est invité à épeler les lettres du mot,
- détection et évaluation des signaux vocaux résultant de l'épellation des lettres par l'utilisateur,
- exécution d'un processus de reconnaissance de mots après la détection respective des signaux vocaux représentant une seule lettre,
- appréciation de la probabilité d'une reconnaissance correcte du mot,
- si, avec la reconnaissance du mot, on obtient un mot avec la probabilité de reconnaissance escomptée, le processus d'épellation est interrompu et le mot édité, et
- une nouvelle reconnaissance vocale des signaux vocaux représentant un mot est exécutée en tenant compte des signaux vocaux de lettres détectés.

6. Procédé destiné à détecter et à évaluer des signaux vocaux représentant un mot prononcé par un utilisateur d'un système de reconnaissance vocale, notamment selon l'une des revendications précédentes, et comportant les étapes suivantes:
- détection des signaux vocaux acoustiques,
- exécution d'un processus de reconnaissance vocale et appréciation de la probabilité de la reconnaissance correcte de la parole,
- si la reconnaissance de la parole ne parvient pas à la probabilité escomptée, l'utilisateur est invité à épeler les lettres du mot,
- détection et évaluation des signaux vocaux résultant de l'épellation des lettres par l'utilisateur,
- exécution d'un processus de reconnaissance de mots après la détection respective des signaux vocaux représentant une seule lettre,
- appréciation de la probabilité d'une reconnaissance correcte du mot,
- si, avec la reconnaissance du mot, on obtient un mot ayant la probabilité de reconnaissance escomptée, le processus d'épellation est interrompu et le mot édité,
- une probabilité de reconnaissance de lettres étant, lors du processus de reconnaissance de mots, déterminée sur la base des signaux de lettres détectés et évalués et combinée à une probabilité de reconnaissance vocale déterminée sur la base des signaux vocaux de mots détectés et évalués pour donner une probabilité de reconnaissance combinée.

7. Procédé selon la revendication 6
**caractérisé par le fait**
**qu'**une liste de mots est établie en fonction de la probabilité combinée de reconnaissance.

8. Procédé selon la revendication 6 ou 7
**caractérisé par le fait**
**que** l'on vérifie, avec seulement une seule interrogation, si un mot est obtenu avec la probabilité de reconnaissance escomptée, la probabilité combinée de reconnaissance étant utilisée comme probabilité de reconnaissance.

9. Procédé selon l'une des revendications 1 à 8
**caractérisé par le fait**
**que** l'interruption du processus d'épellation se fait par envoi d'un message correspondant à l'utilisateur et par arrêt du procédé destiné à détecter et évaluer un mot.

10. Procédé selon l'une des revendications 2 à 9
**caractérisé par le fait**
**que**, si le processus d'épellation n'a pas encore été interrompu, après la détection et l'évaluation des signaux vocaux de lettres représentant chacun une lettre, on vérifie si l'utilisateur continue à prononcer des lettres et, s'il continue, on détecte les signaux vocaux suivants représentant chacun une lettre et, si l'utilisateur ne continue pas à épeler, la liste de mots ou un nombre donné de mots de la liste de mots ayant la probabilité la plus élevée est édité.

11. Dispositif conçu et comportant des moyens pour exécuter un procédé selon l'une des revendications 1 à 10.

12. Dispositif selon la revendication 11
**caractérisé par le fait**
**que** le dispositif est un système de communication téléphonique (1) comportant une unité de commutation (7) avec laquelle des lignes téléphoniques (8, 9) peuvent être reliées à un bus interne de données (2).

13. Produit logiciel d'ordinateur destiné à une installation de traitement de données, qui renferme des sections de code logiciel avec lesquelles il est possible d'exécuter un procédé selon au moins l'une des revendications 1 à 10 sur une installation de traitement de données.
